# EUROPEAN PATENT SPECIFICATION

(11) **EP 3 441 236 B1**
(45) Date of publication and mention of the grant of the patent: **29.04.2020**
(21) Application number: 18188599.7
(22) Date of filing: 13.01.2015
(51) Int. Cl.: B60C 7/24, B60C 7/26, F16B 21/08

(54) **FASTENING MEMBER FOR USE IN A CONNECTION STRUCTURE BETWEEN AN AIRLESS TIRE AND A RIM**
BEFESTIGUNGSELEMENT ZUR VERWENDUNG IN EINER VERBINDUNGSSTRUKTUR ZWISCHEN EINEM LUFTLOSEN REIFEN UND EINER FELGE
ÉLÉMENT DE FIXATION DESTINÉ À ÊTRE UTILISÉ DANS UNE STRUCTURE DE CONNEXION ENTRE UN PNEUMATIQUE SANS AIR ET UNE JANTE

(30) Priority: 10.02.2014 TW 103202311 U
(43) Date of publication of application: 13.02.2019
(62) Divisional of application: 15150867.8
(73) Proprietor: Otrajet Inc., Taichung City 407 (TW)
(72) Inventor: Chen, Ching-Hao, 407 Taichung City (TW)
(74) Representative: Lang, Christian

(56) References cited:
- EP-A1- 1 655 150
- WO-A1-2011/010785
- FR-A- 321 319
- FR-A- 332 619
- JP-A- H11 139 103

## Description

### BACKGROUND OF THE INVENTION

### Field of the Invention

The present invention relates generally to a fastening member, and more particularly to a fastening member for use in a connection structure between an airless tire and a rim.

### Description of the Related Art

Chinese Patent No. 201080001376.4 discloses a technique for connecting an airless tire with the rim. In this technique, multiple strip-shaped stopper members are inserted in a tire lip section of the airless tire and inlaid in the groove of the rim. Two ends of the stopper members are engaged with the inner side of the opening of the groove of the rim. Accordingly, the stopper members are engaged with the rim to locate the tire lip in the groove of the rim so as to connect the airless tire with the rim.

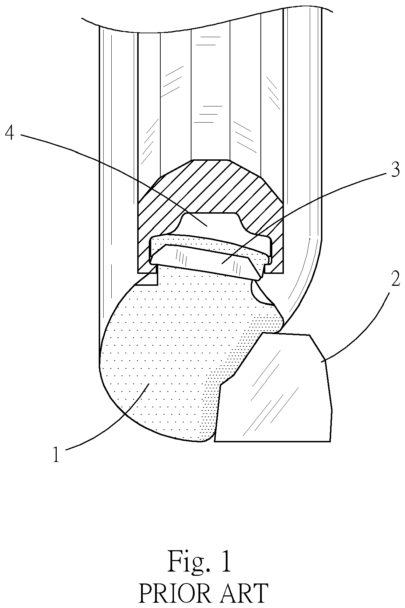

In the conventional inflatable tire structure, the structure layers of fiber wires, steel string rings, artificial fiber strings and tire lip steel wires are used to provide sufficient strength for the tire. When the tire contacts the ground to bear a load and rotate, the tire can keep a complete configuration so as to ensure that the tire is stably connected with the rim and ensure the safety in driving. With respect to an airless tire, especially a solid tire or cavity airless tire, the structure of such tire generally has no structure layer as the inflatable tire. The airless tire only has an elastic antiwear structure similar to the rubber layer of the inflatable tire for providing elasticity and shock absorption effect. Therefore, when the airless tire runs on the ground, in comparison with the inflatable tire, the ability of the airless tire to keep the configuration unchanged is obviously weaker. Therefore, when the airless tire 1 contacts the ground to run over an obstacle 2 as shown in Fig. 1, in the case that the force applied to the airless tire 1 is greater than the engagement force between the stopper members 3 and the groove 4, the tire lip will detach from the rim. This will affect the safety and needs to be overcome.

From the European patent application EP 1 655 150 A1 an attachment structure for fixation of a non-pneumatic tire on a bicycle rim is known. The tire comprises radially extending holes accommodating parts of the attachment structures, respectively. The attachment structure comprises a retaining member, a spacer, a first fastening member and a second fastening member - and is therefore four-parted. The second fastening member extends in an axial direction through the tire being inserted in a corresponding slot formed in the tire. The retaining member is positioned on the surface of the tire facing the rim, i.e. on the surface of the "rim engagement portion" of the tire, and comprises a pair of elastically deformable retaining portions being in contact with the rim such that they act against a movement of the tire away from the rim, thereby holding the tire in position. The spacer is positioned between the retaining member and the second fastening member and is arranged in one of the radially extending holes formed in the tire. The first fastening member is inserted in this arrangement and extends through a hole in the retaining member and through the spacer and is fixed on the second fastening member, for instance by a screw connection.

### SUMMARY OF THE INVENTION

It is therefore a primary object of the present invention to provide a fastening member configured to securely connect an airless tire with a rim in order to provide a simple connection structure between the airless tire and the rim. Further, the fastening member is configured to provide a suitable locating and support effect for the airless tire to enhance the strength thereof, such that, in use, when the airless tire contacts the ground to run over an obstacle, the airless tire is prevented from detaching from the rim so as to ensure safety in driving.

To achieve the above and other objects, the present invention provides a fastening member with the features defined in claim 1. Preferred embodiments thereof are presented in the dependent claims.

The fastening member of the present invention has an extension section with a predetermined length, wherein said predetermined length corresponds to at least one half of a thickness of an annular tire body that is to be connected to a rim by the fastening member of the present invention. The extension section is configured to be coaxially inserted into a corresponding socket and held therein by friction force only, wherein, in use, one end of the extension section, protrudes from an opening of the socket on the inner circumference of the tire body. The fastening member further has a base section fixedly connected with one end of the extension section, the base section being engageable in the connection groove.

In the above fastening member, the extension section has a column body with an outer diameter such that the column body can be tightly inserted in the socket so that the fastening member is securely connectable to an airless tire.

The extension section may further include at least one protrusion protruding radially outwardly from the column body. In use, the protrusion can engage with the wall of the corresponding socket so as to enhance the connection strength between the fastening member and the airless tire.

The extension section may further comprise a split extending axially inwardly from a free end of the column body to divide the column body. Accordingly, in use, the column body will be temporarily contracted under an external force to reduce the outer diameter thereof. In this case, the column body can be successfully inserted into the corresponding socket with smaller inner diameter. After the external force disappears, the column body can restore to its original state with larger outer diameter and expand within the socket. Accordingly, the column body can apply a force to the wall of the socket to enhance the connection strength.

The present invention can be best understood through the following description and accompanying drawings, wherein:

### BRIEF DESCRIPTION OF THE DRAWINGS

Fig. 1 is a view showing that a conventional airless air is detached from the rim when running over an obstacle;
Fig. 2 is a perspective exploded view of the use of a fastening member of the present invention with an airless tire and a rim;
Fig. 3 is a perspective view of the assembly of a fastening member, an airless tire and a rim;
Fig. 4 is a perspective view of the fastening member of a first embodiment of the present invention;
Fig. 5 is a sectional view taken along line 5-5 of Fig. 3;
Fig. 6 is a sectional view taken along line 6-6 of Fig. 5;
Fig. 7 is a sectional view showing the assembly of a fastening member, an airless tire and a rim running over an obstacle and the airless tire being deformed;
Fig. 8 is a perspective view of the fastening member of a second embodiment of the present invention;
Fig. 9 is a sectional view of the fastening member of the second embodiment in a use state assembled with an airless tire and a rim;
Fig. 10 is a perspective view of the fastening member of a third embodiment of the present invention; and
Fig. 11 is a sectional view of the fastening member of the third embodiment of the present invention in a use state assembled with an airless tire and a rim.

### DETAILED DESCRIPTION OF THE PREFERRED EMBODIMENTS

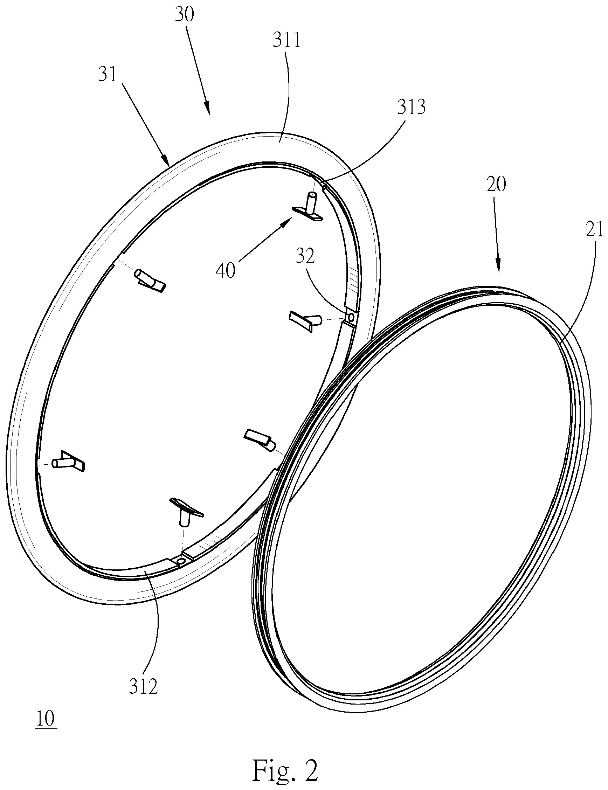

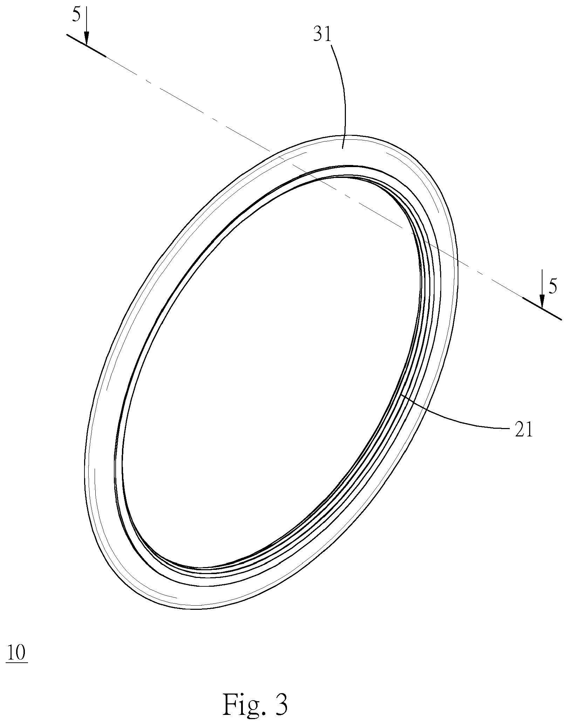

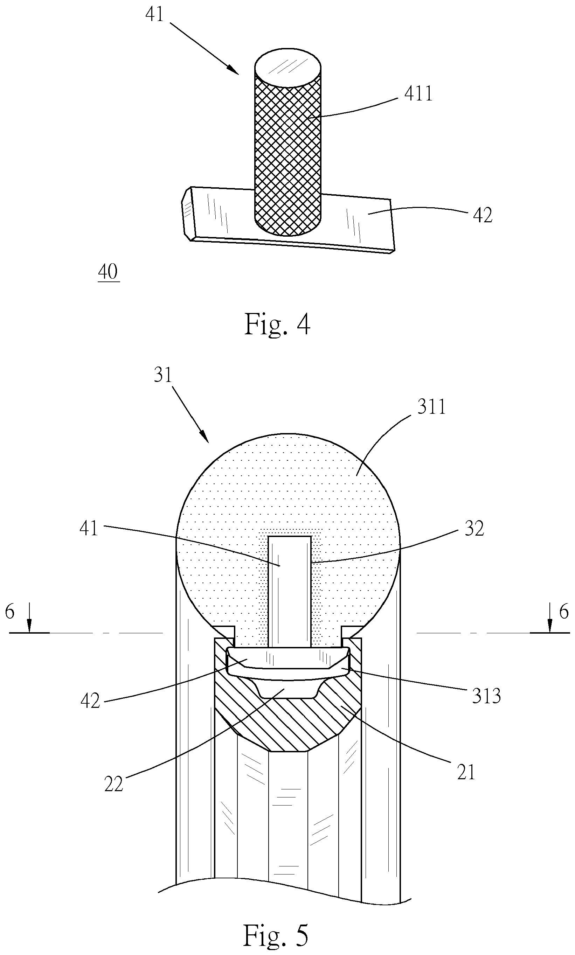

Please refer to Figs. 2 to 6. The fastening member according to a first embodiment is used in a connection structure 10 between an airless tire and a rim, wherein said connection structure 10 includes a rim 20, an airless tire 30 and multiple fastening members 40 according to the present invention.

The rim 20 is similar to the conventional rim, substantially having an annular rim body 21. An annular connection groove 22 with smaller opening is formed on outer circumference of the rim body 21.

The airless tire 30 has a tire body 31 made of polymer material with suitable elasticity by molding. Multiple sockets 32 radially extend from inner circumference of the tire body 31 into the tire body 31 by suitable depth. Each socket 32 has an opening formed on the inner circumference of the tire body 31.

To speak more specifically, the tire body 31 has an annular main body 311. An annular tire lip 312 with a certain thickness protrudes from the inner circumference of the main body 311. The tire lip 312 is inserted in the connection groove 22, whereby the main body 311 is annularly disposed around the rim body 21. Multiple recesses 313 with suitable depth are formed on the inner circumference of the tire lip 312. The depth of the recesses 313 is approximately equal to the thickness of the tire lip 312. The recesses 313 are positioned where the sockets 32 are positioned. Accordingly, the tire lip 312 is interrupted by the recesses 313 to form a discontinuous annular form. The openings of the sockets 32 are formed on the inner circumference of the main body 311.

Each fastening member 40 has an extension section 41 with a certain length and a plate-shaped base section 42 perpendicularly fixedly connected with one end of the extension section 41. In use, the extension section 41 is inserted in the corresponding socket 32 with one end protruding from the opening of the socket 41 on the inner circumference of the main body 311. The base section 42 is inlaid in the recess 313 and engaged in the connection groove 22. The opening of the connection groove 22 with smaller width restricts the base section 42 from detaching out of the connection groove 22 so that the base section 42 is located in the connection groove 22.

The extension section 41 is a column body 411 with a certain diameter, such that, in use, the extension section 41 can be fixedly inserted in the socket 32 by press fit. One end of the column body 41 is perpendicularly fixedly connected with the base section 42, whereby the fastening member 40 can be securely connected with the tire body 31.

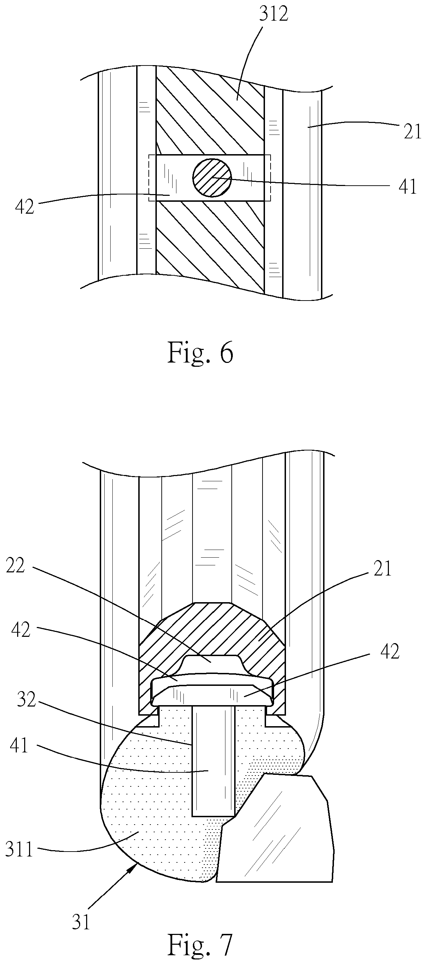

According to the above arrangement, in the use state, the base section 42 of the fastening member 40 is tightly engaged with the rim 20 and the extension section 41 is securely connected with the airless tire 30. Under such circumstance, the airless tire 30 is fastened to the rim 20 without easy detachment. Moreover, the extension section 41 is correspondingly inserted in the radially extending socket 32. Accordingly, the fastening member 40 is configured to provide a two-dimensional connection force between the airless tire 30 and the rim 20. To speak more specifically, in the use state, when the airless tire 30 contacts the ground to smoothly rotate, the force applied to the tire face will be uniformly distributed to every part of the airless tire 30. In this case, the airless tire 30 is uniformly deformed to absorb the force. When the airless tire 30 runs over an obstacle as shown in Fig. 7, the action force concentrated on one side of the tire body 31 will cause severe deformation of one side of the tire body 31. At this time, since the extension section 41 is fixedly connected with the base section 42, the force applied to one side of the tire body 31 is partially transmitted from the base section 42 to the rim 20. Accordingly, the airless tire 30 is prevented from being over-deformed due to excessively great action force applied to a part of the airless tire 30. Therefore, the airless tire 30 is prevented from detaching from the rim 20 and can be stably connected with the rim 20.

Furthermore, in order to make the fastening members 40 provide better support for the airless tire 30 in the use state, the length of the extension section 41 is at least one half of the thickness of the tire body 31. Therefore, the extension section 41 can extend into the tire body 31 by a depth to or over the center of the tire body 31. This can achieve better support effect.

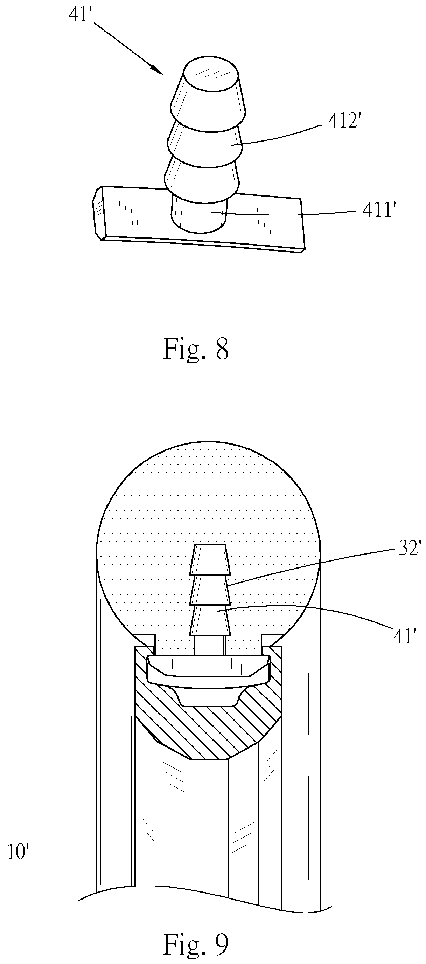

Please now refer to Figs. 8 and 9, which show a second embodiment of a fastening member and the use thereof in a connection structure 10' between an airless tire and a rim. The second embodiment is substantially identical to the first embodiment. The second embodiment is different from the first embodiment in that the connection force between the extension section 41' and the socket 32' can be enhanced, since, in the second embodiment, the extension section 41' has a column body 411' and further has at least one annular protrusion 412' protruding radially outwardly from the column body 411'. In use, when the column body 411' is inserted into the socket 32' the protrusion 412' abuts against the wall of the socket 32' so as to enhance the connection force therebetween.

Moreover, the fastening member may be also provided with multiple protrusions in the form of a reverse hook. This can further enhance the connection force between the extension section 41' and the socket 32' in the use state.

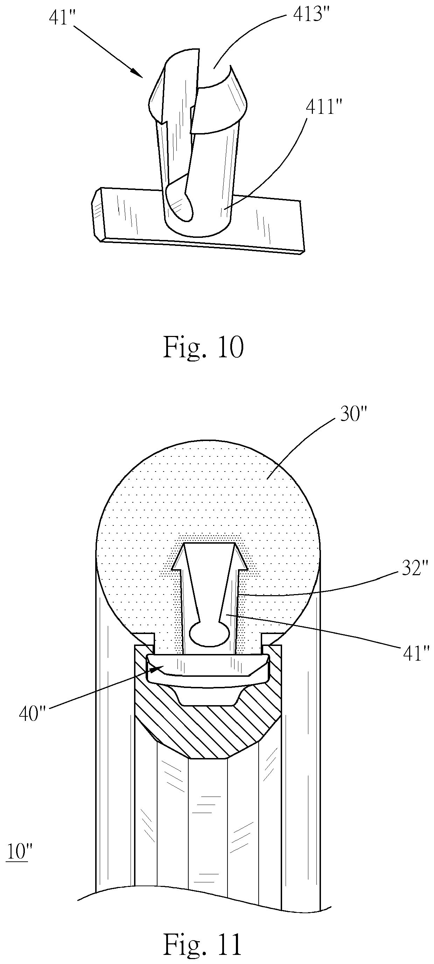

Please now refer to Figs. 10 and 11, which show a third embodiment of a fastening member and the use thereof in a connection structure 10" between an airless tire and a rim. The third embodiment is substantially identical to the second embodiment in object and effect. However, the third embodiment is different from the second embodiment in means. In the third embodiment, each extension section 41" further has a split 413" extending inwardly from the other end of the column body 411" by a certain depth to divide the column body 411" Accordingly, under an external force, the column body 411" can be temporarily contracted to reduce the outer diameter thereof. In this case, the column body 411" can be successfully inserted into a corresponding socket 32" with smaller inner diameter. After the external force disappears, the column body 411" can restore to its original state with larger outer diameter and expand within the socket 32" Accordingly, the column body 411" can apply a force to the wall of the socket 32" to enhance the connection force therebetween. Therefore, the fastening member 40" can be more securely connected with the airless tire 30".

## Claims

1. A fastening member (40) for use with an airless tire (30) and a rim (20), wherein the rim (20) has an annular rim body (21) and defines an annular connection groove (22) on an outer circumference of the rim body (21), and wherein the airless tire (30) has an annular tire body (31) and defines multiple sockets (32) radially extending from an inner circumference of the tire body (31) into the tire body (31), the annular tire body (31) being configured for being coaxially fitted on the rim body (21), the fastening member (40) comprising:
a plate-shaped base section (42) having a first end and a second end spaced from the first end by a predetermined distance, the base section (42) being configured to be engageable with the connection groove (22); and
an extension section (41, 41', 41") having a column body (411, 411', 411") with a first end and a second end, wherein a predetermined length of the a column body (411, 411', 411") is defined between the first and second end, wherein the first end of the extension section (41, 41', 41") is perpendicularly fixedly connected to the base section (42) at a position between the first and second end of the base section (42), such that the column body (411, 411', 411") is perpendicularly extending outwardly from the base section (42), **characterised in that**
the extension section (41, 41', 41") is configured to be coaxially insertable and tightly attachable to one of the sockets (32) by press fit,
wherein the predetermined length of the extension section (41, 41', 41") is at least one half of a thickness of the annular tire body (31).

2. The fastening member (40) as claimed in claim 1, wherein the extension section (41') further includes at least one protrusion (412') radially outwardly protruding from the column body (411').

3. The fastening member (40) as claimed in claim 1 or 2, wherein the extension section (41") further has a split (413") axially inwardly extending from a free end of the column body (411") to divide the column body (411'').

4. The fastening member (40) as claimed in claim 2 wherein the protrusion (412') is an annular protrusion disposed on the circumference of the column body (411').

## Patentansprüche

1. Befestigungselement (40) zur Verwendung mit einem luftlosem Reifen (30) und einer Felge (20), wobei die Felge (20) einen ringförmigen Felgenkörper (21) aufweist und eine ringförmige Verbindungsnut (22) an einem Außenumfang des Felgenkörpers (21) definiert und wobei der luftlose Reifen (30) einen ringförmigen Reifenkörper (31) aufweist und mehrere Steckplätze (32) definiert, die sich von einem Innenumfang des Reifenkörpers (21) radial in den Reifenkörper (31) erstrecken, wobei der ringförmige Reifenkörper (31) darauf ausgelegt ist, koaxial auf den Felgenkörper (21) montiert zu werden, wobei das Befestigungselement (40) umfasst:
einen plattenförmigen Basisabschnitt (42), der ein erstes Ende und ein zweites Ende, das von dem ersten Ende um eine vorbestimmte Distanz beabstandet ist, aufweist, wobei der Basisabschnitt (42) darauf ausgelegt ist, dass er mit der Verbindungsnut (22) in Eingriff gebracht werden kann, und
einen Verlängerungsabschnitt (41, 41', 41"), der einen Säulenkörper (411, 411', 411") mit einem ersten Ende und einem zweiten Ende aufweist, wobei eine vorbestimmte Länge des Säulenkörpers (411, 411', 411") zwischen dem ersten und zweiten Ende definiert ist, wobei das erste Ende des Verlängerungsabschnitts (41, 41', 41") senkrecht fest mit dem Basisabschnitt (42) an einer Position zwischen dem ersten und zweiten Ende des Basisabschnitts (42) verbunden ist, so dass der Säulenkörper (411, 411', 411") sich senkrecht von dem Basisabschnitt (42) heraus erstreckt,
**dadurch gekennzeichnet, dass**
der Verlängerungsabschnitt (41, 41', 41") darauf ausgelegt ist, in einen der Steckplätze (32) koaxial einsteckbar und durch eine Presspassung fest anbringbar zu sein,
wobei die vorbestimmte Länge des Verlängerungsabschnitts (41, 41', 41") zumindest eine Hälfte der Dicke des ringförmigen Reifenkörpers (31) beträgt.

2. Befestigungselement (40) gemäß Anspruch 1, bei welchem der Verlängerungsabschnitt (41') ferner zumindest einen Vorsprung (412') umfasst, der sich von dem Säulenkörper (411') radial nach außen erstreckt.

3. Befestigungselement (40) gemäß Anspruch 1 oder 2, bei welchem der Verlängerungsabschnitt (41") ferner eine Aufspaltung (413") aufweist, die sich von einem freien Ende des Säulenkörpers (411") axial nach innen erstreckt, um den Säulenkörper (411") zu teilen.

4. Befestigungselement (40) gemäß Anspruch 2, bei welchem der Vorsprung (412') ein ringförmiger Vorsprung ist, der an dem Umfang des Säulenkörpers (411') angeordnet ist.

## Revendications

1. Elément de fixation (40) destiné à être utilisé avec un pneumatique sans air (30) et une jante (20), dans lequel la jante (20) a un corps de jante annulaire (21) et définit une gorge de connexion annulaire (22) sur une circonférence externe du corps de jante (21), et dans lequel le pneumatique sans air (30) a un corps de pneumatique annulaire (31) et définit de multiples douilles (32) s'étendant radialement depuis une circonférence interne du corps de pneumatique (31) dans le corps de pneumatique (31); le corps de pneumatique annulaire (31) étant configuré pour être installé de manière coaxiale sur le corps de jante (21), l'élément de fixation (40) comprenant:
une section de base en forme de plaque (42) ayant une première extrémité et une seconde extrémité éloignée de la première extrémité d'une distance prédéterminée, la section de base (42) étant configurée pour pouvoir être mise en prise avec la gorge de connexion (22); et
une section d'extension (41, 41', 41") ayant un corps de colonne (411, 411', 411") avec une première extrémité et une seconde extrémité, dans lequel une longueur prédéterminée du un corps de colonne (411, 411', 411") est définie entre la première et la seconde extrémité, dans lequel la première extrémité de la section d'extension (41, 41', 41") est connectée perpendiculairement de manière fixe à la section de base (42) dans une position entre la première et seconde extrémité de la section de base (42), de telle sorte que le corps de colonne (411, 411', 411") s'étend perpendiculairement vers l'extérieur à partir de la section de base (42),
**caractérisé en ce que**
la section d'extension (41, 41', 41") est configurée pour pouvoir être insérée coaxialement et fixée solidement à l'une des douilles (32) par ajustement serré, dans lequel la longueur prédéterminée de la section d'extension (41, 41', 41") est au moins une moitié d'une épaisseur du corps de pneumatique annulaire (31).

2. Elément de fixation (40) selon la revendication 1, dans lequel la section d'extension (41') inclut en outre au moins une saillie (412') faisant saillie radialement vers l'extérieur du corps de colonne (411').

3. Elément de fixation (40) selon la revendication 1 ou 2, dans lequel la section d'extension (41") présente en outre une fente (413") s'étendant axialement vers l'intérieur d'une extrémité libre du corps de colonne (411") pour diviser le corps de colonne (411").

4. Elément de fixation (40) selon la revendication 2, dans lequel la saillie (412') est une saillie annulaire disposée sur la circonférence du corps de colonne (411').
